# EUROPEAN PATENT SPECIFICATION

(11) **EP 0 619 453 B1**
(45) Date of publication and mention of the grant of the patent: **21.05.1997**
(21) Application number: 94301622.0
(22) Date of filing: 08.03.1994
(51) Int. Cl.: F17D 3/08

(54) **Recuperating device for pipe cleaning pigs**
Auffangvorrichtung für Rohrreiningungsmolche
Dispositif de récupération pour tampons racleurs

(30) Priority: 10.03.1993 GB 9304935
(43) Date of publication of application: 12.10.1994
(73) Proprietor: PLENTY LIMITED, Berkshire RG14 5TR (GB)
(72) Inventor: Smith, Brian, Worksop, Nottinghamshire, S81 8RH (GB)
(74) Representative: Votier, Sidney David

(56) References cited:
- DE-A- 1 750 786
- GB-A- 2 102 095
- US-A- 3 232 090
- US-A- 4 736 482

## Description

This invention relates to the pigging of pipelines, and is especially concerned with a mechanism which assists in the arresting of pigs at the end of their journey through the pipeline.

As is well known, the pigging of pipelines is carried out for various reasons, the most usual of which is for the purpose of cleaning the interior walls. Various designs and shapes of pig are commonly available, one form being the sphere, usually made of rubberised or vulcanised material, which is passed along the pipeline under the pressure of the gas or liquid which flows in the pipeline. The sphere-shaped pig is so sized as to come into contact with any foreign objects attached to the internal wall of the pipeline, and remove them. The pipeline is usually under pressure, and that, the size and speed of the sphere within the pipeline means that as it reaches the end of its travel, the sphere has considerable momentum. If it were not arrested before it reached the end of the pipeline, severe damage could be done to the pipeline closure.

Thus, the sphere, towards the end of its travel in the pipeline, is usually collected in a receiving trap, which decelerates it before it reaches the end of its travel. Such decelerating means may take the form of one or more flaps extending into the pipeline at right angles to its axis, such flaps being pivoted about an axis in or beyond the pipeline wall. Thus, as the fast-travelling spheres contact the flaps, the flaps pivot about their pivot axis and serve to decelerate the sphere by "wedging" the sphere between each flap and the bottom of the pipeline. Specification GB-A-2102095 describes a similar sphere decelerating mechanism.

It sometimes happens that more than one sphere is passing along the pipeline at a time, or a single sphere is travelling too fast, so that contact of a sphere with an arresting flap has the effect of pivoting the flap so severely that the pivoting mechanism is broken. It must therefore be replaced or repaired, and re-set before further pigging can take place.

It is the object of the present invention to provide a mechanism for arresting the motion of spheres travelling in a pipeline, whereby any excess force applied by the fast-travelling sphere to the sphere-arresting member does not result in the breakage of the mechanism mounting the arresting member.

According to the invention, a mechanism for arresting the motion of spheres travelling in a pipeline comprises a sphere-engaging member extending in the pipeline into the path of spheres and rigidly attached to a shaft rotatable in a pressure-retaining housing attached to the pipeline, a first lever fixedly attached to the shaft outside the pressure-retaining housing, a second lever rotatably mounted on the shaft adjacent to the first lever, a stop member adapted to limit the movement of the second lever, and a pin extending between and joining the first and second levers, the pin being adapted to shear upon the application to the sphere-engaging member of a pre-determined force.

Thus, in operation, a sphere travelling along the pipeline will come into engagement with the sphere-engaging member. This will rotate about the shaft in the pressure-retaining housing, and move a certain angular extent with the sphere engaging it. In the normal course of operations the sphere will become wedged between the sphere-engaging member and the bottom of the pipeline, and thereby be arrested, the impact force generated on the sphere-engaging member being transmitted through the mechanism to the stop member and absorbed thereby without damage. From time to time, the force exerted by the sphere on the sphere-engaging member, because of the momentum built up in the sphere by its travel along the pipeline, will be excessive. If the sphere hits the sphere-engaging member with excessive force, it will tend to knock it completely out of the way and damage the mechanism which mounts the sphere-engaging member. The present invention avoids this. Thus, as the sphere-engaging member moves in the pipeline upon engagement by a sphere, the first and second levers mounted on the shaft to which the sphere-engaging member is attached also move, the first lever because it is fixedly attached to the shaft, and the second lever because, although rotatably mounted on the shaft, it is joined for movement with the first lever by virtue of the shear pin. When the second lever comes up against the stop member, its movement is arrested. The shaft continues to rotate, however, carrying the first lever, and the pin shears, thus disconnecting the movement of the first lever from that of the second lever. After the sphere has passed the sphere-engaging member, therefore, the two levers may be re-connected by insertion of a new shear pin, and the mechanism re-adjusted to its original position.

The stop member, which limits the movement of the second lever, is preferably in the form of a cam mounted on the pipeline; the second lever may then carry a cam follower, which engages the cam to stop the movement of the second lever and then re-arrange the position of the second lever relative to the shaft.

In a preferred embodiment there are two sphere-engaging members which extend into the pipeline, the two members being longitudinally spaced along the pipeline a sufficient distance apart to allow each to be moved independently without interfering with a sphere engaged by the other. Each of the two sphere-engaging members will be rigidly attached to a shaft rotatable in a respective pressure-retaining housing attached to the pipeline, first and second levers will be associated with each shaft, and a stop member will be associated with each second lever. Preferably the stop member is in the form of a plate carrying a cam, or two cams, adapted to receive cam followers carried by each of the second levers. Suitably means are mounted on the pipeline for effecting the movement of the cam plate, such means suitably being a pneumatic or hydraulic cylinder or an electrical actuator.

Each sphere-engaging member is suitably in the form of a flap, extending into the pipeline at an oblique angle to its axis, and in a preferred embodiment each flap is in the form of a section of a frusto-cone, having a curvature similar to that of the sphere which it engages. The angle at which the sphere-engaging member extends into the pipeline may be of the order of 40-50°, to the axis of the pipeline, and suitably of the order of 45°. The flaps are suitably welded to bosses, suitably steel bosses, which at their ends remote from the flaps are fixedly attached to the respective rotating shaft.

The shear pin, which enables the first and second levers to be connected for movement together, is suitably made of brass, and may have a size of 15-20mm diameter.

The mechanism of the invention can be used not only for arresting the movement of spheres travelling in a pipeline, but can also enable the spheres to be released, one at a time, when the pressure has been reduced and the pipeline is opened. Thus, the cam plate will suitably be so shaped that the movement of the sphere-engaging members may be sequenced, such that, as desired, both members may be positioned in the path of the spheres, both may be moved out of the path of the spheres, and each individually may be moved into the path of the spheres.

The invention will be described in more detail by reference to the accompanying drawings, which illustrate one embodiment of a sphere-arresting mechanism.

In the drawings, which are diagrammatic in nature,
Figure 1 shows the receiving end of a pipeline, with a number of pigging spheres ready for removal;
Figure 2 is a part-sectional elevation showing the mounting of two sphere-engaging members on a pipeline;
Figure 3 is a part-sectional view taken on the line A-A of Figure 2;
Figure 4 is a view taken from the right-hand side of Figure 2;
Figure 5 is a side view of a lever component of the mechanism;
Figure 6 is a side view of a second lever component;
Figure 7 is a sectional view taken on the line B-B of Figure 6;
Figure 8 is an exploded view showing the configuration of the rotatable shaft and levers relative to a cam plate; and
Figure 9 is a series of diagrams showing sequential positions of the two sphere-engaging members.

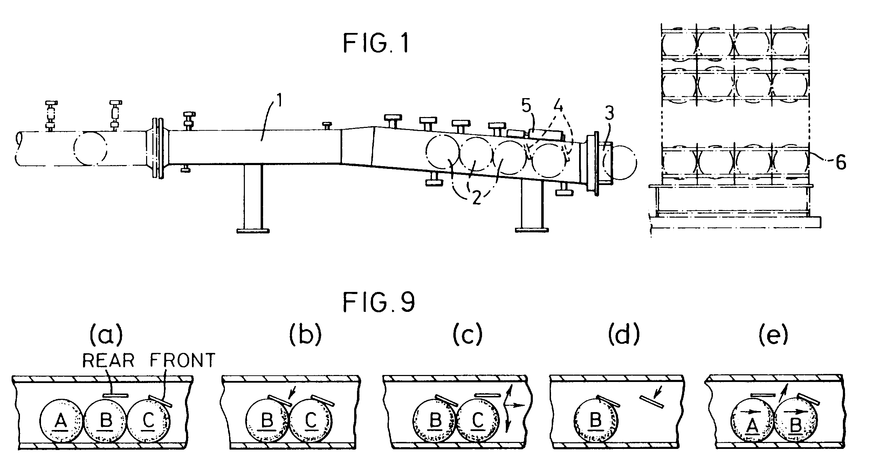

Figure 1 shows the end, i.e. receiver, portion of a pipeline 1 which has been cleaned, or "pigged", by the passage therethrough of a series of spheres 2. As the spheres, which are usually made of vulcanised rubber and travel at high speed through the pipeline, reach the end closure 3 of the pipeline, they are arrested by means of a series (two are shown) of flaps 4 which extend into their path in the pipeline. The pivoting movement of the flaps, into and out of the path of the spheres, is controlled by a mechanism 5 mounted on the pipeline. On release of the pressure in the pipeline, the closure 3 is opened and the spheres 2 are removed, one at a time, into a handling frame 6 into which the spheres may be stacked and then transported away from the site.

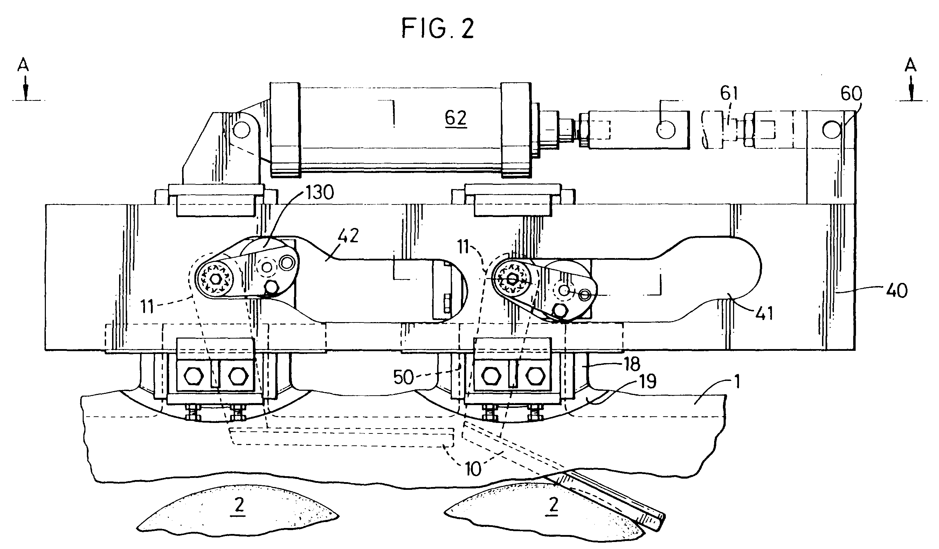

Figure 2 shows the general arrangement of sphere-engaging members in the mechanism of the invention. As in Figure 1, cleaning spheres 2 travel along a pipeline 1, and are arrested by flaps 10 which extend into the pipeline in their path. In Figure 2 the right-hand flap is in its sphere-arresting position, and stops the movement of sphere 2 by causing the sphere to be wedged between the flap 10 and the floor of the pipeline along which it is travelling. The left-hand flap 10 is shown in its non-engaging position, allowing spheres 2 to pass by.

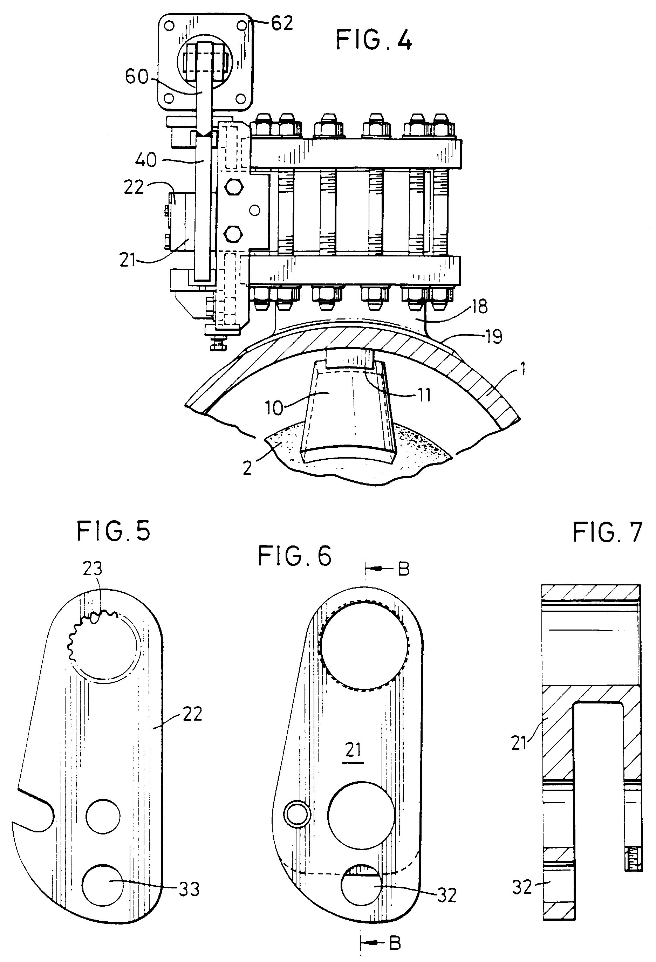

As may be seen from Figure 4, flaps 10 have a form similar to the section of a frusto-cone, whose curvature substantially matches that of the spheres 2 to be arrested. One end of the flap 10 is welded to a steel boss 11 which is toothed at its end remote from flap 10 to receive the splined part 12 of a rotatable shaft 13. Shaft 13 is mounted for rotation in a bush 14 sealed by O-ring seals 15 and closed by an end cap 16, and bearing 17. The shaft 13 is mounted in a pressure-retaining housing 18 attached at its lower end by a collar 19 to the pipeline 1.

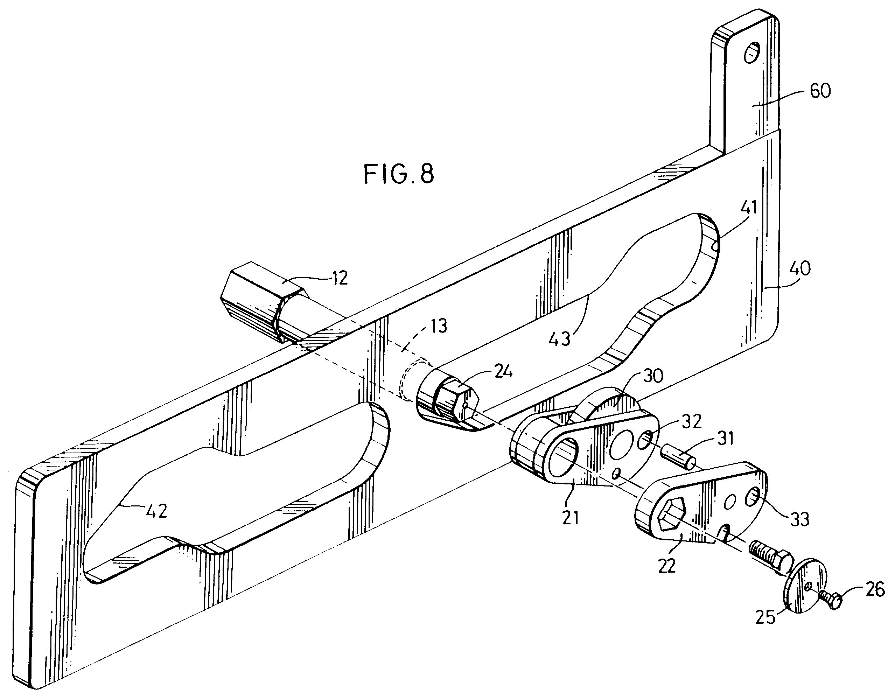

Externally of the housing 18, the end 20 of shaft 13 mounts an inner lever 21, which is freely rotatable on the shaft, and an outer lever 22 having teeth 23 meshing with the splined end 24 of shaft 13. The levers 21, 22 are retained on shaft 13 by means of a retaining washer 25 and a hexagonal-headed bolt 26. The levers 21 and 22 are shown in greater detail in Figures 6 and 5 respectively, and their relationship to the shaft 13 is shown in greater detail in Figure 8.

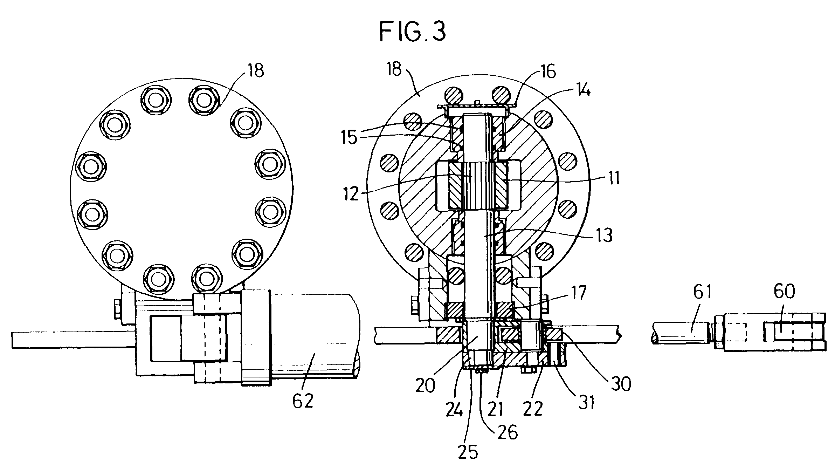

Rotatably mounted on lever 21 is a roller 30. A shear pin 31 is inserted in aperture 32 of lever 21 and in aperture 33 of lever 22, so as to connect the movement of lever 21 with that of lever 22. Thus, as may be seen from Figures 2, 3 and 8, any rotational movement of shaft 13, caused by movement of flap 10, is translated to lever 22 through its connection with end 24 of shaft 13 (shown hexagonal in Figure 8, rather than splined - either form is equally appropriate). Although lever 21 is freely rotatably mounted on shaft 13, it is connected to lever 22 by virtue of the shear pin 31, and therefore moves with lever 22.

The movement of lever 21 is governed by cam plate 40, containing two cams 41, 42, one of which, 41, is shown in operation with lever 21 in Figure 8. (It will be appreciated that the flap 10 shown on the left-hand side of Figure 2 is mounted in precisely the same way as that on the right-hand side, and the movement of the roller 130 will be controlled by cam 42.)

The extent of movement of the flaps 10 in the pipeline 1 is governed by the diameter of the throat 50 at the entrance of the pressure housing 18 to the pipeline 1. The flap 10 shown on the right-hand side of Figure 2 is fully extended into the path of the spheres 2, whilst the flap 10 at the left-hand side of Figure 2 is shown in the other extreme position, allowing the spheres 2 to pass by.

A bracket 60 integral with the cam plate 40 is attached to a piston rod 61 of a hydraulic or pneumatic ram 62. Ram 62 is mounted on the pipeline 1, and controls the movement of cam plate 40.

In operation, cleaning spheres pass along the pipeline 1 under pressure. As they reach the end of their run, they come into contact with a flap 10 extending into their path. Under normal operation, they will be arrested by one of the flaps 10. If, however, the spheres are travelling at such a speed that the contact force which the sphere exerts of the flap 10 is excessive, then the flap 10 will be moved towards the ceiling of the pipeline, and through the boss 11 will cause the shaft 13 to rotate anti-clockwise. This anti-clockwise movement will be transmitted to lever 22, and thence through shear pin 31 to lever 21. The roller 30 will thus be pressed into contact with the upper run of cam 41, i.e. the stop face 43, and the movement of lever 21 will be arrested. Since lever 22 will still be tending to move in an anti-clockwise fashion, the pin 31 will shear, allowing lever 22 to continue to rotate. Flap 10 will thus be allowed to move to its position out of the way of spheres 2, without breakage to itself or to the mechanism controlling it. When this has occurred, the mechanism may simply be returned to its initial state by insertion of a new shear pin 31 into apertures 32, 33. Movement of the cam plate 40 will return the flap 10 to its position in the path of oncoming spheres.

One of the advantages of the mechanism of the invention is that, once the spheres have been arrested by the flaps 10, they can be removed one at a time from the end of the pipeline. This is best illustrated by the series of diagrams shown in Figure 9. Thus, in Figure 9(a), showing front and rear flaps arresting three spheres A, B, and C, the guide plate 40 is in position to place the flaps 10 in the position as shown in Figure 2. In Figure 9(b), the guide plate 40 has been shifted to rotate the shaft 13 and lower the rear flap into contact with sphere B. Further movement of cam plate 40 lifts the front flap and allows sphere C to be removed, whereafter the front flap is lowered once again (Figures 9(c) and (d)). In Figure 9(e) the rear flap has been raised to allow sphere B to move forward into contact with the front flap. The procedure shown in Figure 9(a)-(e) can then be repeated.

The usual pressures within pipelines such as those with which the invention will be used is of the order of 20-400, more usually 150-200, bars. The forces with which spheres will contact the flaps 10 will of course depend on the sizes of the pipeline and the spheres, and the particular type of shear pin will be selected in accordance with the size and speed of travel of the particular sphere in question. The impact force on the flap 10 will normally be a maximum of 2-6 tonnes. Thus, the shear pin used in any particular instance should be one adapted to shear at a loading of the order of 1¼ times the anticipated load.

Spheres come in a variety of sizes, depending upon the diameter of the pipeline to be pigged. For example, the usual range of sphere diameters is from 18in. to 48in., the more usual sizes being 18in., 24in., 30in., 36in. and 48in. For use with a sphere of 48in. diameter, the flaps 10 would normally have a length of the order of 15in., the width of the flap at its top being of the order of 15in., and the width at the bottom being of the order of 20in. The flaps would usually be made of steel, of thickness about 1in..

## Claims

1. A mechanism for arresting the motion of spheres (2) travelling in a pipeline (1) comprising a sphere-engaging member (10) extending in the pipeline into the path of spheres, characterised in said sphere-engaging member being rigidly attached to a shaft (13) rotatable in a pressure-retaining housing (18) attached to the pipeline, a first lever (22) fixedly attached to the shaft outside the pressure-retaining housing, a second lever (21) rotatably mounted on the shaft adjacent to the first lever, a stop member (41) adapted to limit the movement of the second lever, and a pin (31) extending between and joining the first and second levers, the pin (31) being adapted to shear upon the application to the sphere-engaging member of a pre-determined force.

2. A mechanism according to claim 1 wherein the stop member (41) is in the form of a cam (41, 42) mounted on the pipeline and the second lever (21) carries a cam follower (30, 130) which engages the cam to stop the movement of the second lever and re-arrange the position of the second lever relative to the shaft.

3. A mechanism according to claim 1 or 2 comprising two sphere-engaging members (10) which extend into the pipeline and are longitudinally spaced along the pipeline a sufficient distance apart to allow each to be moved independently without interfering with a sphere engaged by the other, each of the two sphere-engaging members being rigidly attached to a shaft (13) rotatable in a respective pressure-retaining housing attached to the pipeline, first and second levers (22, 21) being associated with each shaft, and a stop member (41, 42) being associated with each second lever.

4. A mechanism according to claim 3 wherein said stop member is in the form of a plate (40) carrying a cam (41, 42) adapted to receive a cam follower carried by each of the second levers.

5. A mechanism according to any of claims 1 to 4 wherein means are mounted on the pipeline for effecting the movement of the stop member.

6. A mechanism according to any of claims 1 to 5 wherein the or each sphere-engaging member is in the form of a flap (10) extending into the pipeline at an oblique angle to its axis.

7. A mechanism according to claim 6 wherein each flap (10) is in the form of a section of a frusto-cone, having a curvature similar to that of the sphere which it engages.

8. A mechanism according to claim 6 or 7 wherein the or each flap (10) is welded to a boss (11) which, at its end remote from the flap is fixedly attached to the respective rotating shaft (13).

## Patentansprüche

1. Vorrichtung zum Anhalten der Bewegung von Kugeln (2), die sich in einer Rohrleitung (1) fortbewegen, aufweisend ein kugel-hemmendes Element (10), das sich in der Rohrleitung bis in den Weg der Kugeln erstreckt, dadurch gekennzeichnet, daß das kugel-hemmende Element an einer Welle (13) starr befestigt ist, die in einem an der Rohrleitung befestigten, druckdichten Gehäuse (18) drehbar ist, einen ersten Hebel (22), der außerhalb des druckdichten Gehäuses an der Welle starr befestigt ist, einen zweiten Hebel (21), der neben dem ersten Hebel auf der Welle drehbar angebracht ist, ein Stoppelement (41), das ausgelegt ist, um die Bewegung des zweiten Hebels zu begrenzen, und einen Stift (31), der sich zwischen dem ersten und dem zweiten Hebel erstreckt und diese Hebel miteinander verbindet, wobei der Stift (31) so ausgelegt ist, daß er bei Einwirkung einer vorgegebenen Kraft auf das kugel-hemmende Element abgeschert wird.

2. Vorrichtung gemäß Anspruch 1, wobei das Stoppelement (41) die Form einer Nocke (41, 42) hat, die auf der Rohrleitung angebracht ist, und der zweite Hebel (21) eine Nockenrolle (30, 130) trägt, die gegen die Nocke gedrückt wird, um die Bewegung des zweiten Hebels anzuhalten, und die Position des zweiten Hebels relativ zu der Welle neu festzulegen.

3. Vorrichtung gemäß Anspruch 1 oder 2, aufweisend zwei kugel-hemmende Elemente (10), die sich in die Rohrleitung erstrecken, und längs der Rohrleitung in einem genügenden Abstand voneinander angeordnet sind, um zu ermöglichen, daß jedes Element auf unabhängige Weise bewegt werden kann, ohne mit einer durch andere Element gehemmten Kugel zusammenzustoßen, wobei jedes der zwei kugel-hemmenden Elemente an einer Welle (13) starr befestigt ist, die in einem jeweiligen, an der Rohrleitung befestigten, druckdichten Gehäuse drehbar ist, ein erster und ein zweiter Hebel (41, 42) mit jeder Welle kombiniert sind, und ein Stoppelement (41, 42) mit jedem zweiten Hebel kombiniert ist.

4. Vorrichtung gemäß Anspruch 3, wobei das Stoppelement die Form einer Platte (40) hat, die eine Nocke (41, 42) trägt, die ausgelegt ist, um eine Nockenrolle aufzunehmen, die von jedem der zweiten Hebel getragen wird.

5. Vorrichtung gemäß irgendeinem der Ansprüche 1 bis 4, wobei Mittel auf der Rohrleitung angebracht sind, um die Bewegung des Stoppelements auszuführen.

6. Vorrichtung gemäß irgendeinem der Ansprüche 1 bis 5, wobei das oder jedes kugel-hemmende Element die Form einer Klappe (10) hat, die sich unter einem zu der Achse der Rohrleitung schrägen Winkel in die Rohrleitung erstreckt.

7. Vorrichtung gemäß Anspruch 6, wobei jede Klappe (10) die Form eines Kegelstumpf-Abschnittes hat, der eine ähnliche Krümmung wie die zu hemmende Kugel hat.

8. Vorrichtung gemäß Anspruch 6 oder 7, wobei die oder jede Klappe (10) an einem Vorsprung (11) angeschweißt ist, der an dem fern von der Klappe gelegenen Ende an der jeweiligen Drehwelle (13) starr befestigt ist.

## Revendications

1. Mécanisme pour arrêter le mouvement de sphères (2) circulant dans un pipeline (1) comprenant un élément d'engagement de sphère (10) s'étendant dans le pipeline sur le trajet des sphères, caractérisé en ce que ledit élément d'engagement de sphère est fixé rigidement à un arbre (13) pouvant tourner dans un carter de retenue de pression (18) fixé au pipeline, un premier levier (22) relié fixement à l'arbre à l'extérieur du carter de retenue de pression, un deuxième levier (21) monté en rotation sur l'arbre contigu au premier levier, une butée (41) adaptée pour limiter le mouvement du deuxième levier, et une broche (31) s'étendant entre le premier et le deuxième levier et les reliant, la broche (31) étant adaptée pour se cisailler lors de l'application d'une force prédéterminée sur l'élément d'engagement de sphère.

2. Mécanisme selon la revendication 1 dans lequel la butée (41) a la forme d'une came (41, 42) montée sur le pipeline et le deuxième levier (21) porte une contre-came (30, 130) qui engage la came pour stopper le mouvement du deuxième levier et repositionne le deuxième levier par rapport à l'arbre.

3. Mécanisme selon la revendication 1 ou 2 comprenant deux éléments d'engagement de sphère (10) qui s'étendent dans le pipeline et sont longitudinalement écartés le long du pipeline d'une distance suffisante pour permettre à chacun d'eux d'être déplacé individuellemment sans entrer en collision avec une sphère engagée par l'autre, chacun des deux éléments d'engagement de sphère étant attaché rigidement à un arbre (13) pouvant tourner dans un carter de retenue de pression respectif fixé au pipeline, le premier et le deuxième levier (22, 21) étant associés à chaque arbre, et une butée (41, 42) étant associée à chaque deuxième levier.

4. Mécanisme selon la revendication 3 dans lequel ladite butée a la forme d'une plaque (40) portant une came (41, 42) adaptée pour recevoir une contre-came portée par chacun des deuxièmes leviers.

5. Mécanisme selon l'une quelconque des revendications 1 à 4 dans lequel des moyens sont montés sur le pipeline pour réaliser le mouvement de la butée.

6. Mécanisme selon l'une quelconque des revendications 1 à 5 dans lequel le ou les éléments d'engagement de sphère ont la forme d'un volet (10) s'étendant dans le pipeline suivant un angle oblique par rapport à son axe.

7. Mécanisme selon la revendication 6 dans lequel chaque volet (10) a la forme d'une section d'un tronc de cône ayant une courbure similaire à celle de la sphère qu'il engage.

8. Mécanisme selon la revendication 6 ou 7 dans lequel le ou les volets (10) sont soudés à un bossage (11) qui a son extrémité la plus éloignée du volet attachée fixement à l'arbre tournant respectif (13).
